# EUROPEAN PATENT SPECIFICATION

(11) **EP 3 239 000 B1**
(45) Date of publication and mention of the grant of the patent: **27.11.2019**
(21) Application number: 16425036.7
(22) Date of filing: 27.04.2016
(51) Int. Cl.: B60R 9/10

(54) **SUPPORT FRAME CONNECTABLE TO A VEHICLE, IN PARTICULAR FOR THE TRANSPORT OF BICYCLES AND MOTORCYCLES, AND VEHICLE PROVIDED WITH BRACKETS FOR COUPLING SUCH SUPPORT FRAME**
MIT EINEM FAHRZEUG VERBINDBARER STÜTZRAHMEN, INSBESONDERE ZUM TRANSPORT VON FAHRRÄDERN UND MOTORRÄDERN, UND FAHRZEUG MIT TRÄGERN ZUR ANKOPPLUNG SOLCH EINES STÜTZRAHMENS
CADRE DE SUPPORT POUVANT ÊTRE RACCORDÉ À UN VÉHICULE, EN PARTICULIER POUR TRANSPORTER DES BICYCLETTES ET DES MOTOCYCLETTES ET VÉHICULE ÉQUIPÉ DE SUPPORTS POUR COUPLAGE D'UN TEL CADRE DE SUPPORT

(43) Date of publication of application: 01.11.2017
(73) Proprietor: FCA Italy S.p.A., 10135 Torino (IT)
(72) Inventor: Tosco, Franco, 10043 Orbassano (IT); Pignata, Eraldo, 10135 Torino (IT)
(74) Representative: Lovino, Paolo

(56) References cited:
- EP-A2- 0 451 691
- DE-U1- 9 311 291
- US-A- 3 931 903

## Description

The present invention relates to a vehicle provided with a support frame to carry additional loads besides those that may be contained in a trunk or in a rear load compartment of the vehicle. In particular, the present invention makes explicit reference to the transport of bicycles and motorcycles, without thereby losing generality.

On the market, there are many known solutions of bicycle racks and motorcycle racks, which are coupled to motor vehicles at a rear part of their body, i.e. behind the rear door closing the luggage compartment or the load compartment.

The known support frames are not completely satisfactory, as they are relatively bulky and, in general, their presence makes impossible the opening of the rear doors, even when the bicycle or motorcycle is not on the support frame.

Furthermore, in the known solutions, the coupling methods provided for securing the frame to the vehicle body generally do not allow to quickly fasten and unfasten the additional frame and, at the same time, to support a heavy load. In other words, the known solutions that can be quickly fastened and unfastened, in general, only allow to carry a load with a relatively low weight, for example a single bicycle.

For instance, documents US3931903 and DE9311291 disclose a swivelling motorcycle rack. In particular, the rack of US3931903 includes a base frame fixedly mounted to a vehicle chassis for load distribution purposes. Moreover, document EP0451691, which corresponds to the preamble of claim 1, discloses a carrier device comprising a carrying frame that is supported in a swivelling manner by an additional frame fixed to a vehicle. Another known solution is disclosed in prior art document EP0451691 A2.

Some other known solutions, then, require modifications to the motor vehicle body to allow coupling the support frame. Usually, such modifications are relevant and, therefore, require a procedure of re-homologation of the vehicle. The object of the present invention is to provide a support frame connectable to a vehicle, in particular for the transport of bicycles and motorcycles, solving in a simple and inexpensive way the drawbacks set forth above.

The present invention provides a vehicle provided with brackets and with a support frame, as defined in claim 1.

For a better understanding of the present invention it is now described a preferred embodiment, purely by way of a non-limiting example, with reference to the accompanying drawings, in which:
- Figure 1 is a perspective of a preferred embodiment of the vehicle provided with support frame, in particular for the transport of bicycles and motorcycles, according to the present invention;

- Figure 2 shows, on an enlarged scale, the support frame of Figure 1;
- Figure 3 is a section, on an enlarged scale, of a detail of the support frame, obtained through a vertical section plane, orthogonal to the axis of the support frame;
- Figure 4 shows, in side view, a variant of the detail of Figure 3; and
- Figure 5 shows, on an enlarged scale, a detail of the vehicle visible in Figure 1.

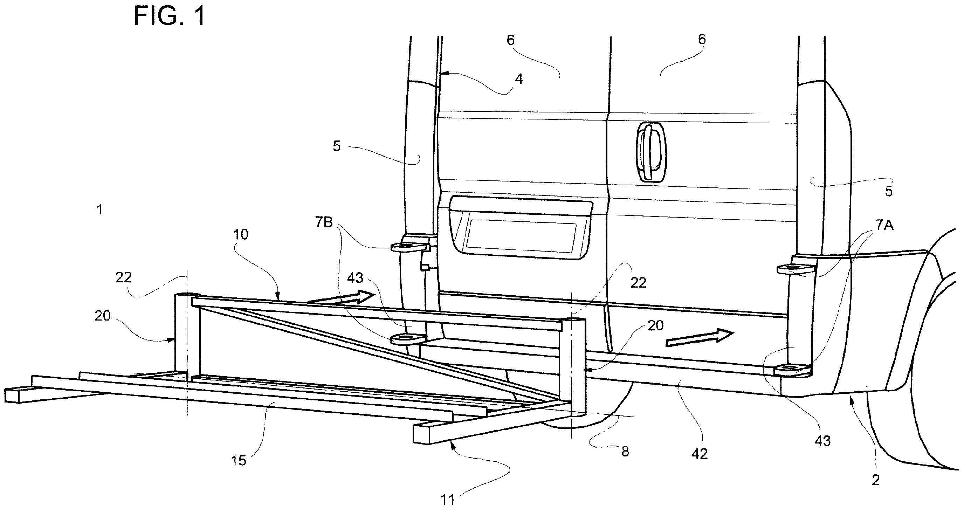

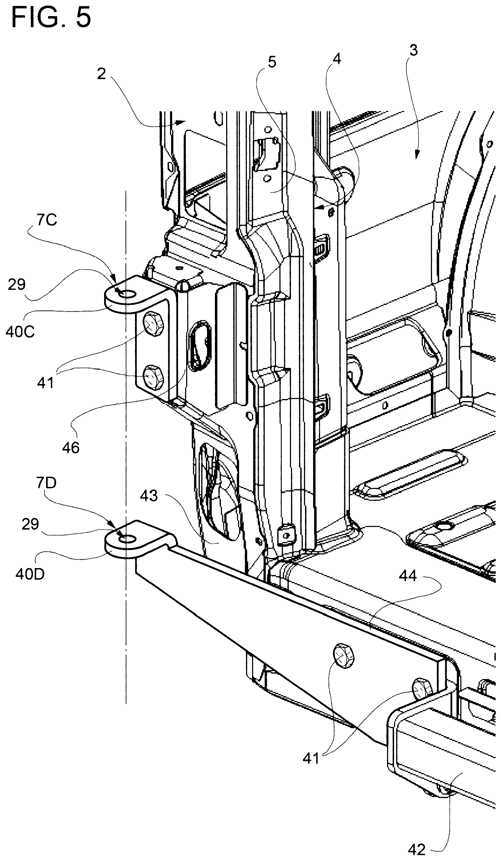

In Figure 1, the reference number 1 indicates a support frame, which is configured to be fixedly coupled to a vehicle 2 (partially shown) to carry an additional load. With reference to Figure 5, the vehicle 2 has a rear load compartment or a luggage compartment 3, which is provided with a rear access opening 4, delimited on the sides by two uprights 5. As shown in Figure 1, the vehicle 2 comprises one or more movable doors 6 to open and close the opening 4; in particular, there are provided two doors 6, each hinged to a respective upright 5 about a substantially vertical axis. However, the frame 1 can also be applied to solutions provided with a rear door pivotable about a horizontal axis.

The frame 1 is coupled to right brackets 7A and left brackets 7B, which are arranged on opposite sides of the opening 4 and of the doors 6 and are secured to the vehicle body 2, as described more in detail below.

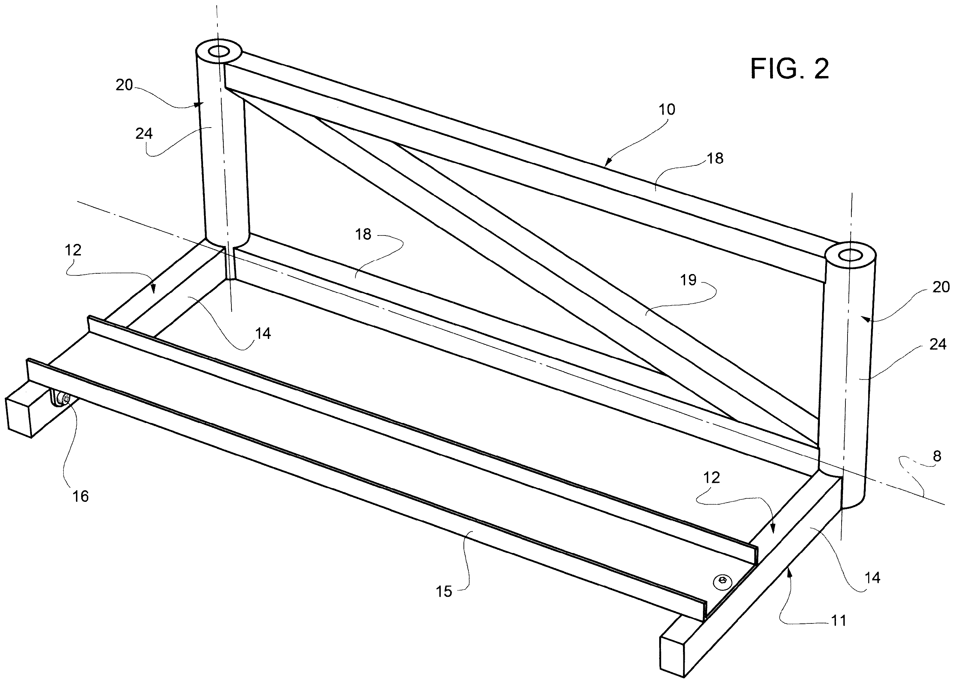

With reference to Figure 2, the frame 1 is elongated along an axis 8, which, in use, is horizontal and orthogonal to the longitudinal travel direction of the vehicle 2. The frame 1 is generally L-shaped, if cross-sectioned along a plane orthogonal to the axis 8. In particular, the frame 1 comprises a connecting structure 10 and a support structure 11, which cantileverly projects from a lower end of the structure 10 and has an upper surface 12, which defines a support plane parallel to the axis 8.

In turn, the structure 10 cantileverly projects upward from a front end of the structure 11 and then extends transversely to the surface 12. Preferably, the structure 10 protrudes orthogonally to the surface 12. Moreover, when the frame 1 is secured to the vehicle 2, the structure 10 is substantially vertical.

According to the shown preferred embodiment, the structure 11 is defined by two parallel bars 14 and the surface 12 is defined by the upper face of said bars 14.

Preferably, the frame 1 further comprises a channel 15, which is parallel to the axis 8 and is fixedly arranged on the surface 12. The channel 15 is configured to support and hold the wheels of a bicycle or a motorcycle (not shown) and is of a known type, so that is not described and/or shown in more detail.

In particular, the channel 15 is hinged to one of the two bars 14 by a hinge 16 to rotate about a hinge axis parallel to the bars 14. The channel 15 rests on the other bar 14 and is specifically held on this latter by means of a not shown removable constraint, e.g. by means of a hook or a padlock.

In the lowered position, the channel 15 allows to load the motorcycle.

In case of need, for example to reduce the overall size of the frame 1 during the transport when no motorcycle is on board, two further hinges can be possibly provided at the front ends of the bars 14 to rotate the structure 11, for example upward, about an axis of rotation parallel to the axis 8.

According to the shown preferred embodiment, the structure 10 comprises two bars 18 parallel to the axis 8 and spaced apart in a direction transverse to the surface 12. The structure 10 further comprises an inclined bar 19, whose ends are respectively secured to the bars 18, for example by welding.

The structure 10 further comprises two attachment members 20, which are arranged at opposite side ends of the frame 1, along the axis 8. According to an aspect of the present invention, the attachment members 20 are configured to be respectively coupled to the brackets 7A and 7B in fixed positions and in a releasable way.

According to an aspect of the present invention, at least one of the side ends of the structure 10 comprises a hinge 21, defined by a hinge seat and/or by a hinge pin and having a hinge axis 22 which is orthogonal to the axis 8 and extends transversely to the surface 12, so that it is substantially vertical and/or parallel to the uprights 5. The hinge 21 enables a rotation of the frame 1 with respect to the vehicle body 2 about the axis 22 when the attachment member 20 of the opposite side end is disengaged from the corresponding brackets (7A or 7B). Thanks to this feature, a user can temporarily move the frame 1 toward a side of the vehicle 2 without completely removing the frame 1, and therefore can open the doors 6 and easy access the load compartment 3 in case of need.

Preferably, as described more in detail below, the hinge 21 is integrated in at least one of the attachment members 20. Advantageously, the two attachment members 20 are similar, so that both work as a hinge, thus allowing the user to decide freely whether to rotate the frame 1 toward the right side or toward the left side of the vehicle 2. According to a variant not shown, the hinge 21 is a separate device from the attachment members 20, but in any case it is arranged at at least one of the opposite side ends of the frame 1 to allow the rotation of the structure 11 and of an intermediate part of the structure 10 about the hinge axis 22 toward the right side or toward the left side of the vehicle 2.

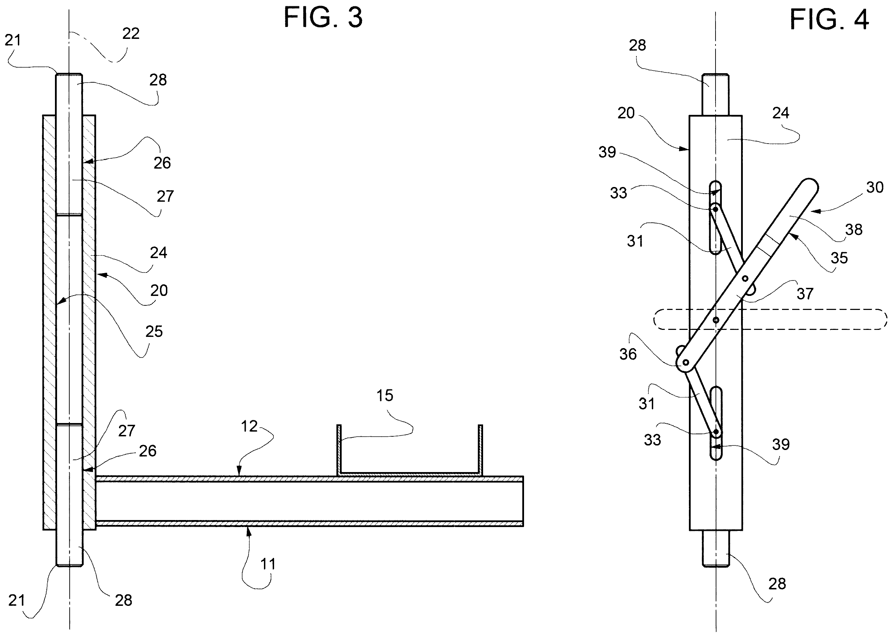

As shown in a simplified way in the cross-section of Figure 3, each attachment member 20 preferably comprises a tubular element 24, preferably secured to the ends of the bars 18 and defining an inner seat 25, which extends along the axis 22 and leads to the top and bottom ends of the tubular element 24. Obviously, as an alternative to the one shown in Figure 3, two axially separate seats might be provided, instead of a single through seat 25. Each attachment member 20 further comprises at least one pin 26, which is coaxial with the seat 25. In particular, two pins 26 are provided, each at a corresponding axial end of the seat 25. When the frame 1 is coupled to the brackets 7A, 7B, each pin 26 of the attachment member 20 comprises an inner portion 27 engaging the seat 25 and an axial end 28, which protrudes from the tubular element 24 to engage one of these brackets. In the specific case, the ends 28 define the hinge 21, and rotatably engage corresponding hinge seats 29 of the brackets 7 (Figure 5).

The pins 26 may be defined by latches which are completely separate and independent from the tubular elements 24 when the frame 1 is uncoupled from the vehicle 2, and which are axially inserted from the outside, through the hinge seats 29 and into the seat 25, by the user when the frame 1 is to be secured to the vehicle body 2; or the pins 26 can be defined by latches that remain coupled to the tubular elements 24 when the frame 1 is uncoupled from the vehicle 2, e.g. as provided in the variant shown in Figure 4.

In Figure 4, the parts constituting the attachment member 20 are identified, where possible, by the same reference numbers used in Figure 3. In this embodiment, the pins 26 are restrained to the tubular element 24 so as to slide axially between a retracted position (not shown), where they are completely housed in the seat 25, and an extracted position, where the ends 28 axially protrude from the tubular element 24. The attachment member 20 further comprises a lever mechanism 30 arranged, at least in part, out of the tubular element 24, coupled to the pins 26 and operable, for example manually, to translate the pins 26 between their retracted and their extracted positions. In particular, the lever mechanism 30 comprises two connecting rods 31, which at one end are hinged to the portions 27 about respective pins 33, mutually parallel and orthogonal to the axis 22. The opposite ends of the connecting rods 31 are hinged to a control lever 35 at an end area 36 and, respectively, an intermediate area 37. The lever 35 comprises an end portion 38 that cantileverly extends with respect to the area 37 and is operable to rotate the lever 35 so that the pins 33 get axially closer or farther.

In particular, when the lever 35 extends orthogonally to the axis 22, the pins 26 are in their retracted position. On the contrary, when the lever 35 is parallel to the axis 22, the pins 26 are in the extracted position. As shown in Figure 4, furthermore, the tubular element 24 has two slits 39 parallel to the axis 22 and respectively engaged by the pins 33, preferably guiding the sliding of the pins 33 parallel to the axis 22 during the operation of the lever mechanism 30.

The lever 35 preferably has a hinging area, which is intermediate between the areas 36 and 37 and is hinged to the attachment member 20 at a central point between the slits 39.

With reference to Figure 5, the brackets 7 are relatively simply coupled to the vehicle body 2. First, each side of the vehicle 2 provides only two coupling points, namely an upper constraint point and a lower constraint point.

The constraint points, or coupling points, in particular, are defined by respective brackets. Figure 5 shows an upper bracket 7C and a lower bracket 7D, secured to respective parts of the vehicle body.

The brackets 7C and 7D comprise respective plates 40C, 40D on which the hinge seats 29 are formed in mutually coaxial positions. The distance between the plates 40C, 40D is equal to the axial height of the corresponding tubular element 24, so as not to leave a vertical clearance to the frame 1 with respect to the brackets 7.

Advantageously, the brackets 7C and 7D are secured to the corresponding parts of the vehicle body only by means of screws or bolts 41.

According to a variant not shown, on each side of the vehicle 2, the upper constraint point and the lower constraint point are defined by a single bracket, namely by a single piece which is equivalent to the set of brackets 7C and 7D, so as to limit possible positioning errors of the brackets 7C and 7D (with regard to the vertical alignment, to the relative distance, to the parallelism of the plates 40C and 40D, etc...).

In the shown case, the vehicle 2 is a commercial vehicle having a rear bumper 42 arranged below the doors 6 and extending between two side structures 43, which are normally made of plastic material and are called "cantonals". The structures 43, in turn, are arranged on opposite sides of the doors 6. The bracket 7D is superimposed and secured to a metal wall 44, which is arranged below the structures 43, in a position horizontally, aligned with the rear bumper 42. In particular, the ends of a regular rear bumper must be possibly removed and/or modified to enable the mounting and/or the passage of the brackets 7D, aligning the hinge seats 29 along the axes 22 without altering the body structure. A modification of this type is relatively small and does not alter the security requirements that must meet the vehicle 2 in relation to a rear impact. For example, the side ends of the rear bumper 42 are uncoupled from the structures 43 and are also secured to the plates 44.

As regards the bracket 7C, this latter is preferably superimposed and secured to a metal wall 46, being part of a fastening system 47 which secures a lower hinge of the door 6 to the corresponding upright 5.

From the above, it is clear that the proposed solution allows a rotation of the frame 1, in case of need, on a side of the vehicle 2, in order to open the doors 6 and then access the load compartment 3. In particular, the frame 1 can be rotated both on the right and on the left side.

The proposed solution is relatively simple and compact, since the hinge 21 is part of the attachment members 20 that secure the frame 1 to the brackets 7. In particular, the proposed solution, the one of Figure 4, provides for a so-called "quick coupling" to connect the frame 1, which facilitates the operations of fastening and unfastening to the vehicle 2.

At the same time, the vehicle 2 is provided with a very simple system to secure the frame 1, namely with brackets 7 which are simply bolted to the vehicle body and may possibly be applied in a workshop, even outside of the production line. In other words, the frame 1 defines a product that can be chosen within a so-called "after-market accessories line". Moreover, the brackets 7 are minimally invasive with regard to any change to be made on the vehicle 2, are relatively scarcely bulky and do not affect the aesthetics of the vehicle 2 (when the frame 1 is not mounted, the brackets 7 are almost invisible from a close point of view).

Moreover, it is possible to homologate only the frame 1, without having to re-homologate the vehicle 2 after the application of the brackets 7, i.e. without having to update the vehicle registration at the vehicle registration office, since the application of the brackets 7 does not change the vehicle body and does not alter the safety conditions of the vehicle 2.

Furthermore, the ensemble formed by the frame 1 and the brackets 7 is relatively lightweight if compared to the known solutions that can support an equal load. Furthermore, the use of the channel 15 allows easily loading and securing a motorcycle for transporting it behind the doors 6. However, it is not excluded that the frame 1 may have a different configuration to transport different types of loads.

From the above it is finally evident that the described and shown frame 1 and vehicle 2 can be subject to modifications and variations which do not depart from the scope of protection of the present invention as defined in the appended claims.

In particular, the configuration of the elements 24 may be different from the one shown by way of example.

In addition, sensors might be provided, possibly in connection with the vehicle on-board electronics, to detect possible anomalies, such as an abnormal coupling of the frame 1 to the brackets 7 and/or an excessive load on the frame 1, with a subsequent signalling of the anomaly to the user or driver.

Moreover, further detention systems might be provided to increase the stability of the coupling between the frame 1 and the brackets 7; for example, such fastening systems could be controlled by a closing/opening electronic signal depending on the so-called "central locking" of the vehicle 2.

## Claims

1. A vehicle (2) comprising:
- a body;
- a rear load compartment or rear luggage compartment (3) having a rear access opening (4);
- at least one movable rear door (6) to open/close said rear access opening (4);
- brackets (7) arranged on opposite sides of said rear door (6) and
- a support frame (1) elongated along an axis (8), having a support surface (12,15) parallel to said axis (8) for supporting a load and comprising:
a) attachment means (20) defined by two attachment members (20) arranged at opposite side ends of said support frame (1) along said axis (8) and releasably coupled to said brackets (7);
b) hinge means (21) allowing a rotation of at least a portion of the support frame (1) with respect to said body about a hinge axis (22) that extends orthogonally to said axis (8) and transversely to said support surface (12) and is arranged at one of said side ends to allow said rotation when the attachment member (20) at the opposite side end is uncoupled from said body;
said brackets (7), for each side of the vehicle (2), being defined only by an upper bracket (7C) and by a lower bracket (7D), so as to define respective constraint points; **characterized in that** said upper brackets (7C) and said lower brackets (7D) are secured to respective parts of said body; the two lower brackets and the two upper brackets comprising respective plates (40C, 40D), each having a hinge seat (29), which is axially rotatably engaged by said hinge means (21); for each side of the vehicle, the hinge seats (29) in the plates of said upper bracket and lower bracket being formed in mutually coaxial positions.

2. The vehicle according to claim 1, **characterized in that** said lower and upper brackets are secured to the respective parts of said body solely by means of screws or bolts (41).

3. The vehicle according to claim 1 or 2, **characterised in that** each of said upper brackets (7C) is superimposed and secured to a first metal wall (46); said first metal wall (46) being part of a fastening system (47) which secures a lower hinge of said door (6) to a corresponding upright (5), laterally delimiting said rear access opening (4).

4. The vehicle according to anyone of the previous claims, **characterized by** comprising a rear bumper (42) arranged below said door (6) and extending between two side structures (43) arranged on opposite sides of the door (6); each of said lower brackets (7D) being superimposed and secured to a second metal wall (44), which is arranged below said structures (43), in a position horizontally aligned with said rear bumper (42).

5. The vehicle according to claim 4, **characterized in that** said rear bumper (42) comprises opposite side ends, which are uncoupled from said structures (43) and are secured to said second metal walls (44).

6. The vehicle according to any one of the preceding claims, **characterized in that** said hinge means (21) are part of at least one of the attachment members (20).

7. The vehicle according to claim 6, **characterized in that** the attachment means (20) are identical.

8. The vehicle according to claim 6 or 7, **characterized in that** said hinge means (21) are defined by a hinge pin (26) .

9. The vehicle according to any one of claims 6 to 8, **characterized in that** said at least one of the attachment members (20) comprises a tubular element (24) defining an inner seat (25), which extends along said hinge axis (22) and leads out through at least one axial end of said tubular element (24).

10. The vehicle according to claim 9, **characterized in that** said at least one of the attachment members (20) further comprises two hinge pins (26), coaxial to said seat (25) and each arranged at a corresponding axial end of said tubular element (24).

11. The vehicle according to claim 10, **characterized in that** said hinge pins (26) comprise respective inner portions (27) engaging said seat (25) and respective axial ends (28) configured to protrude axially from said tubular element (24) for defining said hinge means (21).

12. The vehicle according to claim 9, **characterized in that** said at least one of the attachment members (20) further comprises:
- at least one hinge pin (26), coaxial to said seat (25) and axially movable between a retracted position, where it is completely housed in said seat (25), and an extracted position, where it has an axial end (28) axially protruding from said tubular element (24);
- a lever mechanism (30) at least partially arranged out of said tubular element (24), coupled to said hinge pin (26) and operable to move said hinge pin (26) between the retracted and the extracted position.

13. The vehicle according to any one of the preceding claims, **characterized by** comprising:
- a connecting structure (10) that is substantially vertical, and
- a support structure (11), which cantileverly projects from a lower end of said connecting structure (10);
said support surface (12, 15) being defined by said support structure (10);
said attachment means (20) being part of said connecting structure (10).

14. The vehicle according to claim 13, **characterized in that** said support structure (11) is rotatable with respect to said connecting structure (10) about an axis of rotation parallel to said axis (8).

15. The vehicle according to claim 13 or 14, **characterized in that** said support structure (10) comprises a channel (15) parallel to said axis (8) and configured to support two wheels of a motorcycle or a bicycle.

## Patentansprüche

1. Fahrzeug (2), umfassend:
- eine Karosserie;
- einen hinteren Laderaum oder hinteren Gepäckraum (3), der eine hintere Zugangsöffnung (4) aufweist;
- mindestens eine bewegliche hintere Tür (6), um die hintere Zugangsöffnung (4) zu öffnen/schließen;
- Halterungen (7), die an gegenüberliegenden Seiten der hinteren Tür (6) angeordnet sind, und
- einen Tragrahmen (1), der sich entlang einer Achse (8) erstreckt, eine Tragfläche (12, 15) parallel zur Achse (8) zum Tragen einer Last aufweist und Folgendes umfasst:
a) Befestigungsmittel (20), die durch zwei Befestigungsbauteile (20) definiert sind, die an gegenüberliegenden Seitenenden des Tragrahmens (1) entlang der Achse (8) angeordnet und lösbar mit den Halterungen (7) verbunden sind;
b) Scharniermittel (21), die eine Drehung mindestens eines Teils des Tragrahmens (1) bezüglich der Karosserie um eine Scharnierachse (22) ermöglichen, die sich orthogonal zur Achse (8) und quer zur Tragfläche (12) erstreckt und an einem der Seitenenden angeordnet ist, um die Drehung zu ermöglichen, wenn das Befestigungsbauteil (20) an dem gegenüberliegenden Seitenende von der Karosserie abgekoppelt ist;
wobei die Halterungen (7) für jede Seite des Fahrzeugs (2) nur durch eine obere Halterung (7C) und durch eine untere Halterung (7D) definiert sind, um jeweilige Begrenzungspunkte zu definieren;
**dadurch gekennzeichnet, dass** die oberen Halterungen (7C) und die unteren Halterungen (7D) an jeweiligen Teilen der Karosserie angebracht sind; wobei die zwei unteren Halterungen und die zwei oberen Halterungen jeweilige Platten (40C, 40D) umfassen, die jeweils einen Scharniersitz (29) aufweisen, der durch die Scharniermittel (21) axial drehbar in Eingriff genommen wird; wobei für jede Seite des Fahrzeugs die Scharniersitze (29) in den Platten der oberen Halterung und der unteren Halterung in zueinander koaxialen Positionen ausgebildet sind.

2. Fahrzeug nach Anspruch 1, **dadurch gekennzeichnet, dass** die unteren und oberen Halterungen nur mittels Schrauben oder Bolzen (41) an den jeweiligen Teilen der Karosserie angebracht sind.

3. Fahrzeug nach Anspruch 1 oder 2, **dadurch gekennzeichnet, dass** jede der oberen Halterungen (7C) an einer ersten Metallwand (46) aufgesetzt und angebracht ist; wobei die erste Metallwand (46) Teil eines Befestigungssystems (47) ist, das ein unteres Scharnier der Tür (6) an einem entsprechenden Pfosten (5) anbringt, der die hintere Zugangsöffnung (4) seitlich begrenzt.

4. Fahrzeug nach einem der vorhergehenden Ansprüche, **gekennzeichnet durch** einen hinteren Stoßfänger (42), der unterhalb der Tür (6) angeordnet ist und sich zwischen zwei Seitenstrukturen (43) erstreckt, die an gegenüberliegenden Seiten der Tür (6) angeordnet sind; wobei jede der unteren Halterungen (7D) an einer zweiten Metallwand (44) aufgesetzt und angebracht ist, die unterhalb der Strukturen (43) in einer Position, die horizontal mit dem hinteren Stoßfänger (42) ausgerichtet ist, angeordnet ist.

5. Fahrzeug nach Anspruch 4, **dadurch gekennzeichnet, dass** der hintere Stoßfänger (42) gegenüberliegende Seitenenden umfasst, die von den Strukturen (43) abgekoppelt und an den zweiten Metallwänden (44) angebracht sind.

6. Fahrzeug nach einem der vorhergehenden Ansprüche, **dadurch gekennzeichnet, dass** die Scharniermittel (21) Teil von mindestens einem der Befestigungsbauteile (20) sind.

7. Fahrzeug nach Anspruch 6, **dadurch gekennzeichnet, dass** die Befestigungsmittel (20) identisch sind.

8. Fahrzeug nach Anspruch 6 oder 7, **dadurch gekennzeichnet, dass** die Scharniermittel (21) durch einen Scharnierstift (26) definiert sind.

9. Fahrzeug nach einem der Ansprüche 6 bis 8, **dadurch gekennzeichnet, dass** das mindestens eine der Befestigungsbauteile (20) ein rohrförmiges Element (24) umfasst, das einen inneren Sitz (25) definiert, der sich entlang der Scharnierachse (22) erstreckt und durch mindestens ein axiales Ende des rohrförmigen Elements (24) herausführt.

10. Fahrzeug nach Anspruch 9, **dadurch gekennzeichnet, dass** das mindestens eine der Befestigungsbauteile (20) ferner zwei Scharnierstifte (26) umfasst, die koaxial zu dem Sitz (25) und jeweils an einem entsprechenden axialen Ende des rohrförmigen Elements (24) angeordnet sind.

11. Fahrzeug nach Anspruch 10, **dadurch gekennzeichnet, dass** die Scharnierstifte (26) jeweilige innere Abschnitte (27) umfassen, die den Sitz (25) und jeweilige axiale Enden (28) in Eingriff nehmen, die ausgestaltet sind, um axial von dem rohrförmigen Element (24) zum Definieren der Scharniermittel (21) vorzuragen.

12. Fahrzeug nach Anspruch 9, **dadurch gekennzeichnet, dass** das mindestens eine der Befestigungsbauteile (20) ferner umfasst:
- mindestens einen Scharnierstift (26), der koaxial zu dem Sitz (25) und axial zwischen einer eingezogenen Position, in der er vollständig in dem Sitz (25) aufgenommen ist, und einer ausgefahrenen Position, in der er ein axiales Ende (28) aufweist, das axial von dem rohrförmigen Element (24) vorragt, bewegbar ist;
- einen Hebelmechanismus (30), der mindestens teilweise außerhalb des rohrförmigen Elements (24) angeordnet, mit dem Scharnierstift (26) gekoppelt und betätigbar ist, um den Scharnierstift (26) zwischen der eingezogenen und der ausgefahrenen Position zu bewegen.

13. Fahrzeug nach einem der vorhergehenden Ansprüche, **gekennzeichnet durch** das Umfassen von Folgendem:
- einer Verbindungsstruktur (10), die im Wesentlichen vertikal ist, und
- einer Tragstruktur (11), die freitragend aus einem unteren Ende der Verbindungsstruktur (10) vorragt;
wobei die Tragfläche (12, 15) durch die Tragstruktur (10) definiert ist;
wobei die Befestigungsmittel (20) Teil der Verbindungsstruktur (10) sind.

14. Fahrzeug nach Anspruch 13, **dadurch gekennzeichnet, dass** die Tragstruktur (11) in Bezug auf die Verbindungsstruktur (10) um eine zu der Achse (8) parallele Drehachse drehbar ist.

15. Fahrzeug nach Anspruch 13 oder 14, **dadurch gekennzeichnet, dass** die Tragstruktur (10) einen Kanal (15) umfasst, der parallel zu der Achse (8) und ausgelegt ist, um zwei Räder eines Motorrads oder eines Fahrrads zu tragen.

## Revendications

1. Véhicule (2) comprenant :
- une caisse ;
- un compartiment de charge arrière ou un compartiment à bagage arrière (3) ayant une ouverture d'accès arrière (4) ;
- au moins une porte arrière mobile (6) pour ouvrir/fermer ladite ouverture d'accès arrière (4) ;
- des consoles (7) agencées sur des côtés opposés de ladite porte arrière (6) et
- un châssis de support (1) s'étendant le long d'un axe (8), ayant une surface de support (12, 15) parallèle audit axe (8) pour supporter une charge et comprenant :
a) des moyens de fixation (20) définis par deux organes de fixation (20) agencés à des extrémités latérales opposées dudit châssis de support (1) le long dudit axe (8) et accouplés de façon libérable auxdites consoles (7) ;
b) des moyens d'articulation (21) permettant une rotation d'au moins une portion du châssis de support (1) par rapport à ladite caisse autour d'un axe d'articulation (22) qui s'étend orthogonalement audit axe (8) et transversalement à ladite surface de support (12) et est agencé à l'une desdites extrémités latérales pour permettre ladite rotation lorsque l'organe de fixation (20) à l'extrémité latérale opposée est désaccouplé de ladite caisse ;
lesdites consoles (7), pour chaque côté du véhicule (2), étant définies uniquement par une console supérieure (7C) et par une console inférieure (7D), de façon à définir des points de contrainte respectifs ;
**caractérisé en ce que** lesdites consoles supérieures (7C) et lesdites consoles inférieures (7D) sont fixées à des parties respectives de ladite caisse ; les deux consoles inférieures et les deux consoles supérieures comprenant des plaques (40C, 40D) respectives, ayant chacune un siège d'articulation (29), qui est engagé en rotation axiale par lesdits moyens d'articulation (21) ; pour chaque côté du véhicule, les sièges d'articulation (29) dans les plaques de ladite console supérieure et de ladite console inférieure étant formés dans des positions mutuellement coaxiales.

2. Véhicule selon la revendication 1, **caractérisé en ce que** lesdites consoles supérieure et inférieure sont fixées aux parties respectives de ladite caisse seulement au moyen de vis ou de boulons (41).

3. Véhicule selon la revendication 1 ou 2, **caractérisé en ce que** chacune desdites consoles supérieures (7C) est superposée et fixée à une première paroi en métal (46) ; ladite première paroi en métal (46) faisant partie d'un système d'attache (47) qui fixe une charnière inférieure de ladite porte (6) à un montant correspondant (5), délimitant latéralement ladite ouverture d'accès arrière (4).

4. Véhicule selon l'une quelconque des revendications précédentes, **caractérisé en ce qu'**il comprend un pare-chocs arrière (42) agencé au-dessous de ladite porte (6) et s'étendant entre deux structures latérales (43) agencées sur des côtés opposés de la porte (6) ; chacune desdites consoles inférieures (7D) étant superposée et fixée à une deuxième paroi en métal (44), qui est agencée en dessous desdites structures (43), dans une position alignée horizontalement avec ledit pare-chocs arrière (42).

5. Véhicule selon la revendication 4, **caractérisé en ce que** ledit pare-chocs arrière (42) comprend des extrémités latérales opposées, qui sont désaccouplées desdites structures (43) et sont fixées auxdites deuxièmes parois de métal (44).

6. Véhicule selon l'une quelconque des revendications précédentes, **caractérisé en ce que** lesdits moyens d'articulation (21) font partie d'au moins l'un des organes de fixation (20).

7. Véhicule selon la revendication 6, **caractérisé en ce que** les moyens de fixation (20) sont identiques.

8. Véhicule selon la revendication 6 ou 7, **caractérisé en ce que** lesdits moyens d'articulation (21) sont définis par une axe de charnière (26).

9. Véhicule selon l'une quelconque des revendications 6 à 8, **caractérisé en ce que** ledit au moins l'un des organes de fixation (20) comprend un élément tubulaire (24) définissant un siège interne (25), qui s'étend le long dudit axe d'articulation (22) et débouche à travers au moins une extrémité axiale dudit élément tubulaire (24).

10. Véhicule selon la revendication 9, **caractérisé en ce que** ledit au moins l'un des organes de fixation (20) comprend en outre deux axes de charnières (26), coaxiaux audit siège (25) et chacune agencée à une extrémité axiale correspondante dudit élément tubulaire (24).

11. Véhicule selon la revendication 10, **caractérisé en ce que** lesdites broches d'articulation (26) comprennent des portions internes (27) respectives engageant ledit siège (25) et des extrémités axiales (28) respectives configurées pour faire saillie axialement à partir dudit élément tubulaire (24) afin de définir lesdits moyens d'articulation (21).

12. Véhicule selon la revendication 9, **caractérisé en ce que** ledit au moins un des organes de fixation (20) comprend en outre :
- au moins un axe de charnière (26), coaxial audit siège (25) et axialement mobile entre une position rétractée, où il est complètement logée dans ledit siège (25), et une position extraite, où il a une extrémité axiale (28) dépassant axialement dudit élément tubulaire (24) ;
- un mécanisme de levier (30) au moins partiellement agencé hors dudit élément tubulaire (24), accouplé audit axe de charnière (26) et opérationnel pour déplacer ledit axe de charnière (26) entre la position rétractée et la position extraite.

13. Véhicule selon l'une quelconque des revendications précédentes, **caractérisé en ce qu'**il comprend :
- une structure de raccordement (10) qui est sensiblement verticale, et
- une structure de support (11), qui fait saillie en porte-à-faux à partir d'une extrémité inférieure de ladite structure de raccordement (10) ;
ladite surface de support (12, 15) étant définie par ladite structure de support (10) ;
lesdits moyens de fixation (20) faisant partie de ladite structure de raccordement (10).

14. Véhicule selon la revendication 13, **caractérisé en ce que** ladite structure de support (11) peut tourner par rapport à ladite structure de raccordement (10) autour d'un axe de rotation parallèle audit axe (8).

15. Véhicule selon la revendication 13 ou 14, **caractérisé en ce que** ladite structure de support (10) comprend un canal (15) parallèle audit axe (8) et configuré pour supporter deux roues d'un motocycle ou d'une bicyclette.
